# EUROPEAN PATENT APPLICATION

(11) **EP 4 782 693 A1**
(43) Date of publication of application: **29.07.2026**
(21) Application number: 25799160.4
(22) Date of filing: 22.08.2025
(51) Int. Cl.: F04C 29/04, F04C 18/16, F04C 29/00, H02K 7/14, H02K 9/19

(54) **SCREW COMPRESSOR AND REFRIGERATION DEVICE**

(30) Priority: 18.09.2024 JP 2024161483
(71) Applicant: DAIKIN INDUSTRIES, LTD., Osaka-Shi, Osaka 530-0001 (JP)
(72) Inventor: MORI, Kazuki, Osaka-Shi, Osaka 5300001 (JP); MIYAMURA, Harunori, Osaka-Shi, Osaka 5300001 (JP); YAMADA, Masahiro, Osaka-Shi, Osaka 5300001 (JP); INOUE, Takashi, Osaka-Shi, Osaka 5300001 (JP); IMAMURA, Yoshiyuki, Osaka-Shi, Osaka 5300001 (JP); TAKAHASHI, Kazuhei, Osaka-Shi, Osaka 5300001 (JP)
(74) Representative: Goddar, Heinz J.
(86) International application number: PCT/JP2025/029548
(87) International publication number: WO 2026/063135

(57) **Abstract**

A screw compressor includes a compression mechanism including a screw rotor and configured to compress a refrigerant, a motor configured to rotate the screw rotor and including a coil and a stator core, an inverter configured to supply electric power to the motor and to be cooled by a liquid refrigerant, and a casing including a suction chamber configured to receive the refrigerant from outside, a rotor chamber configured to accommodate the compression mechanism, and a motor chamber configured to accommodate the motor and located between the suction chamber and the rotor chamber, wherein the liquid refrigerant that has cooled the inverter is supplied to one or more coil ends of the coil or the stator core.

## Description

### TECHNICAL FIELD

The disclosures herein relate to screw compressors and refrigeration apparatuses.

### BACKGROUND ART

Patent Literature (PTL) 1 discloses a screw compressor that cools the entirety of a coil end of a stator coil of a motor with an intake fluid.

### CITATION LIST

### PATENT LITERATURE

PTL 1: Japanese Laid-Open Patent Publication No. 2005-057916

### SUMMARY OF THE INVENTION

### PROBLEM TO BE SOLVED BY THE INVENTION

In a screw compressor for cooling a coil or a stator core of a motor with an intake refrigerant gas, when the specific gravity of the refrigerant gas is small, the temperature of the refrigerant gas rises greatly in a process of cooling the motor. Since the temperature of the refrigerant gas rises greatly, the temperature of the motor may rise downstream of the motor.

The present disclosure provides a screw compressor which enhances the cooling effect of the motor by the refrigerant.

### MEANS FOR SOLVING THE PROBLEM

A screw compressor according to aspect 1 includes a compression mechanism including a screw rotor and configured to compress a refrigerant, a motor configured to rotate the screw rotor and including a coil and a stator core, an inverter configured to supply electric power to the motor and to be cooled by a liquid refrigerant, and a casing including a suction chamber configured to receive the refrigerant from outside, a rotor chamber configured to accommodate the compression mechanism, and a motor chamber configured to accommodate the motor and located between the suction chamber and the rotor chamber, wherein the liquid refrigerant that has cooled the inverter is supplied to one or more coil ends of the coil or the stator core.

According to the screw compressor of aspect 1, the cooling effect of the motor by the refrigerant can be enhanced.

Aspect 2 of the present disclosure is the screw compressor according to aspect 1, wherein the liquid refrigerant supplied to the one or more coil ends or the stator core is supplied from one position or a plurality of positions in a circumferential direction.

According to the screw compressor of aspect 2, the cooling effect of the motor can be further enhanced by discharging the refrigerant from one or more positions in the circumferential direction.

Aspect 3 of the present disclosure is the screw compressor according to aspect 1 or 2, wherein the liquid refrigerant is supplied to a coil end, the coil end of the one or more coil ends of the coil being on a side of the suction chamber.

According to the screw compressor of aspect 3, the cooling effect of the motor can be further enhanced by supplying the liquid refrigerant to the coil end on the suction chamber side.

Aspect 4 of the present disclosure is the screw compressor according to aspect 1 or 2, wherein the liquid refrigerant is supplied to a coil end, the coil end of the one or more coil ends of the coil being on a side of the rotor chamber.

According to the screw compressor of aspect 4, the cooling effect of the motor can be further enhanced by supplying the liquid refrigerant to the coil end on the rotor chamber side.

Aspect 5 of the present disclosure is the screw compressor according to aspect 1 or 2, including a terminal unit, wiring from the outside being connected to the terminal unit, wherein the casing has a recess at which the terminal unit is attached, the recess extending outward relative to the motor chamber, and the liquid refrigerant is supplied to a coil end in proximity to the recess, the coil end being of the one or more coil ends, or the stator core.

According to the screw compressor of aspect 5, by supplying the liquid refrigerant to the recess to which the terminal unit is attached, temperature rise of the motor due to refrigerant in a gaseous state remaining in the recess can be reduced.

Aspect 6 of the present disclosure is the screw compressor according to any one of aspects 1 to 5, wherein the inverter is provided seamlessly with the casing.

According to the screw compressor of aspect 6, a screw compressor capable of cooling the motor more efficiently can be miniaturized.

Aspect 7 of the present disclosure is the screw compressor according to any one of aspects 1 to 6, wherein a second liquid refrigerant, other than the liquid refrigerant that has cooled the inverter, is further supplied to the one or more coil ends or the stator core.

According to the screw compressor of aspect 7, the motor can be cooled more efficiently by further supplying a second liquid refrigerant different from the liquid refrigerant that cooled the inverter.

Aspect 8 of the present disclosure is the screw compressor according to aspect 7, wherein the liquid refrigerant is supplied to the one or more coil ends or the stator core when a temperature of the inverter is equal to or greater than a first temperature, and the second liquid refrigerant is supplied to the one or more coil ends or the stator core when a temperature of the motor is equal to or greater than a second temperature.

According to the screw compressor of aspect 8, the inverter and the motor can be cooled more efficiently according to the temperature of the inverter or the motor.

A refrigeration apparatus according to aspect 1 includes the screw compressor of any one of aspects 1 to 8.

According to the refrigeration apparatus according to aspect 1, the cooling effect of the motor by the refrigerant can be enhanced in the screw compressor provided in the refrigeration apparatus.

### BRIEF DESCRIPTION OF THE DRAWINGS

[FIG. 1] FIG. 1 is a circuit diagram of a refrigerant of a refrigeration apparatus using a screw compressor according to the present embodiment.
[FIG. 2] FIG. 2 is a graph illustrating an example of an operation range of the refrigeration apparatus using the screw compressor according to the present embodiment.
[FIG. 3] FIG. 3 is a cross-sectional view illustrating the screw compressor according to the present embodiment.
[FIG. 4] FIG. 4 is a cross-sectional view illustrating the screw compressor according to the present embodiment.
[FIG. 5] FIG. 5 is a cross-sectional view illustrating a cooling portion in the screw compressor according to the present embodiment.
[FIG. 6] FIG. 6 is a cross-sectional view illustrating a first modification of the screw compressor according to the present embodiment.
[FIG. 7] FIG. 7 is a cross-sectional view of a second modification of the screw compressor according to the present embodiment.
[FIG. 8] FIG. 8 is a drawing illustrating a flow of a liquid refrigerant in a third modification of the screw compressor according to the present embodiment.
[FIG. 9] FIG. 9 is a hardware configuration diagram illustrating a hardware configuration of a controller for controlling the liquid refrigerant supplied to the third modification of the screw compressor according to the present embodiment.
[FIG. 10] FIG. 10 is a drawing illustrating processing of the controller for controlling the liquid refrigerant supplied to the third modification of the screw compressor according to the present embodiment.

### DESCRIPTION OF THE PREFERRED EMBODIMENTS

### <REFRIGERATION APPARATUS>

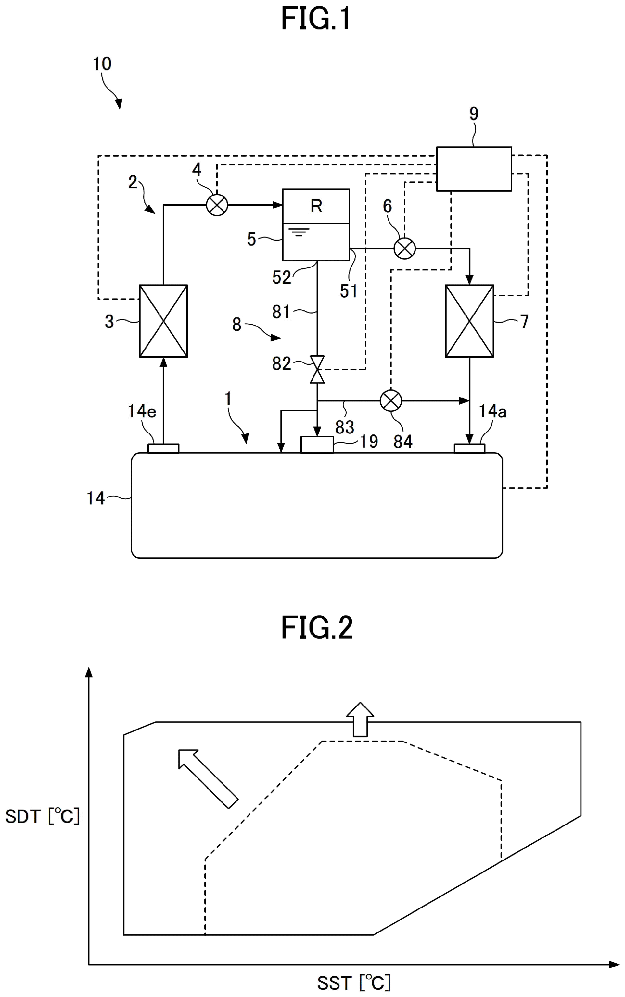

A refrigeration apparatus using a screw compressor according to the present embodiment will be described. FIG. 1 is a circuit diagram of a refrigerant of the refrigeration apparatus 10 using a screw compressor 1, an example of the screw compressor according to the present embodiment. The refrigeration apparatus 10 is, for example, a water heater or a chiller unit. The refrigeration apparatus 10 may be, for example, an air conditioner.

The refrigeration apparatus 10 has a refrigerant circuit 2 filled with a refrigerant R. The refrigerant R includes, for example, at least one of R454C, R134a, R32, R1234ze, R1234yf, ammonia, and propane as a refrigerant component. The refrigeration apparatus 10 performs a vapor compression refrigerating cycle. The refrigerant circuit 2 includes the screw compressor 1, a radiator 3, a first expansion valve 4, a gas-liquid separator 5, a second expansion valve 6, an evaporator 7, an injection mechanism 8, and a controller 9. In FIG. 1, a solid arrow indicates a flow of the refrigerant R in the refrigerant circuit 2, and a dotted line indicates an electrical connection between the controller 9 and each component.

The screw compressor 1 includes a generally cylindrical casing 14 provided with a suction port 14a and a discharge port 14e. The screw compressor 1 includes an inverter unit 19 for driving a motor. The screw compressor 1 compresses the refrigerant R taken in through the suction port 14a in a low-pressure gaseous state, and discharges the refrigerant R in a high-pressure gaseous state through the discharge port 14e. Details of the screw compressor 1 will be described later.

The refrigerant R in the high-pressure gaseous state discharged from the discharge port 14e of the screw compressor 1 is condensed by discharging heat in the radiator 3. The refrigerant R condensed in the radiator 3 to become a high-pressure liquid refrigerant is decompressed by the first expansion valve 4. The refrigerant R decompressed by the first expansion valve 4 is gas-liquid separated by the gas-liquid separator 5 and stored at the bottom of the gas-liquid separator 5. The refrigerant R in a liquid state (liquid refrigerant) stored at the bottom of the gas-liquid separator 5 flows out from a refrigerant outlet 51 of the gas-liquid separator 5 and is decompressed by the second expansion valve 6. The refrigerant R decompressed by the second expansion valve 6 absorbs heat in the evaporator 7 and evaporates. The refrigerant R evaporated by the evaporator 7 is taken in in a low-pressure gaseous state from the suction port 14a of the screw compressor 1.

The injection mechanism 8 includes an injection pipe 81, an electromagnetic valve 82, a branch pipe 83, and a flow control valve 84. One end of the injection pipe 81 is connected to an injection port 52 provided at the bottom of the gas-liquid separator 5. The other end of the injection pipe 81 is connected to the casing 14 and the inverter unit 19 of the screw compressor 1. The electromagnetic valve 82 is provided at a location partway in the injection pipe 81. The electromagnetic valve 82 is opened and closed under control of the controller 9. The branch pipe 83 is branched from the injection pipe 81 between the electromagnetic valve 82 and the screw compressor 1. The branch pipe 83 is connected to the refrigerant circuit between the evaporator 7 and the screw compressor 1. The flow control valve 84 is provided at a location partway in the branch pipe 83. The flow control valve 84 is controlled by the controller 9 so that its opening degree is adjusted.

When the temperature of the refrigerant R discharged from the screw compressor 1 exceeds a predetermined threshold value, the controller 9 opens the electromagnetic valve 82 to supply the refrigerant R in a liquid refrigerant state to the screw compressor 1. The controller 9 also adjusts the opening degree of the flow control valve 84 according to the temperature of the refrigerant R discharged from the screw compressor 1, for example. The controller 9 adjusts an amount of the refrigerant R supplied to the screw compressor 1 by the injection mechanism 8. The controller 9 then controls the temperature of the refrigerant R discharged from the screw compressor 1.

FIG. 2 is a graph illustrating an example of an operation range of a refrigeration apparatus 10 using the screw compressor 1 according to the present embodiment. In the graph of FIG. 2, the horizontal axis represents saturation suction temperature (SST), and the vertical axis represents saturation discharge temperature (SDT). In FIG. 2, a broken line represents the operation range of a conventional screw compressor using R134a as a refrigerant. In FIG. 2, a solid line represents the operation range of the screw compressor 1 using, for example, R454C as the refrigerant R.

In response to increasing demand for substituting heat pump chillers from gas boilers due to international decarbonization efforts and uncertainty in an energy situation, it is required to improve performance of the refrigeration apparatus 10 that can also be used as a heat pump chiller. Specifically, as shown by arrows in FIG. 2, it is required to expand the operation range of the screw compressor 1 mounted in the refrigeration apparatus 10 to an operation range of lower SST and higher SDT than that of a conventional screw compressor, that is, a range of lower outside air temperature and higher outlet water temperature. For example, the screw compressor according to the present embodiment is required to be operated under a condition where the compression ratio is 7 or more. Further, for example, the screw compressor according to the present embodiment is required to be operated under a condition where the saturation suction temperature (SST) is less than 25°C. Further, for example, the screw compressor according to the present embodiment is required to be operated under a condition where the saturation discharge temperature (SDT) is higher than 68°C or a condition where the saturation discharge temperature (SDT) is higher than 75°C.

### <EMBODIMENT>

In the following, the screw compressor according to the present embodiment will be described with reference to the accompanying drawings. Although the embodiment will be described below, it will be understood that various changes in form and details can be made without departing from the spirit and scope of the claims.

In the drawings, the same constituent elements are denoted with the same reference numerals, and redundant description thereabout may be omitted. In addition, in each of the drawings, dimensions, ratios, or numbers may be exaggerated or simplified as necessary to facilitate understanding of the invention.

In directions such as parallel, right angle, orthogonal, horizontal, vertical, top and bottom, left and right, front and rear, and the like, a shift is permitted to a degree that does not impair the effect of the embodiment. The shape of a corner is not limited to a right angle and may be rounded. Terms such as parallel, right angle, orthogonal, horizontal, and vertical may include substantially parallel, substantially right angle, substantially orthogonal, substantially horizontal, and substantially vertical, respectively.

For example, substantially parallel means that even if two lines or two surfaces are not completely parallel to each other, they can be treated as parallel to each other within manufacturing tolerances. Other terms such as substantially right angle, substantially orthogonal, substantially horizontal, and substantially vertical are also intended to include cases where a positional relationship between two lines or two surfaces is within manufacturing tolerances.

A screw compressor according to the present embodiment includes a compression mechanism having a screw rotor and compressing a refrigerant, a motor rotating the screw rotor and having a coil and a stator core, an inverter supplying power to the motor and being cooled by the liquid refrigerant, and a casing. The casing in the screw compressor according to the present embodiment has a suction chamber for introducing a refrigerant from the outside, a rotor chamber for accommodating the compression mechanism, and a motor chamber accommodating the motor and positioned between the suction chamber and the rotor chamber. In the screw compressor according to the present embodiment, the liquid refrigerant obtained by cooling the inverter is supplied to the coil ends of the coil or the stator core.

In the screw compressor according to the present embodiment, the liquid refrigerant obtained by cooling the inverter directly cools the coil ends of the coil or the stator core. In the screw compressor according to the present embodiment, the motor and the compression mechanism are accommodated in the casing. In the screw compressor according to the present embodiment, the suction chamber, the motor chamber, and the rotor chamber communicate with each other. In the screw compressor according to the present embodiment, the refrigerant introduced from the outside flows in the order of the suction chamber, the motor chamber, and the rotor chamber, and is compressed by the compression mechanism.

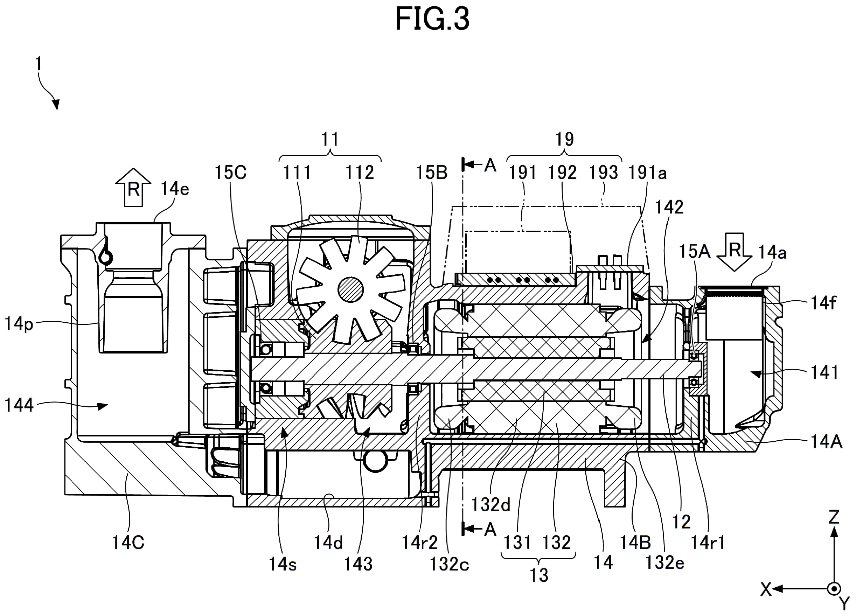

FIG. 3 is a cross-sectional view illustrating the screw compressor 1, an example of the screw compressor according to the present embodiment.

A virtual three-dimensional coordinate system (XYZ Cartesian coordinate system) composed of an X-axis, a Y-axis, and a Z-axis (XYZ axes) orthogonal to each other may be set in the drawings for convenience of explanation. For example, when a black circle is shown within a circle representing a coordinate axis that is perpendicular to the paper surface of the drawing, it indicates that the coordinate axis is directed toward the front side of the paper. When a cross is shown within a circle representing a coordinate axis, it indicates that the coordinate axis is directed toward the back side of the paper.

Note that the coordinate system is defined for the purpose of explanation and is not limited to the state of the screw compressor or the like according to the present embodiment.

In the following drawings, the X-axis direction is a direction along which a shaft 12 extends.

The screw compressor 1 compresses the refrigerant R as a low-pressure gas. As described above, the screw compressor 1 is provided with a generally cylindrical casing 14 provided with the suction port 14a and a discharge port 14e. The screw compressor 1 compresses the refrigerant R as a low-pressure gas taken in from the suction port 14a. The screw compressor 1 then discharges the refrigerant R as a high-pressure gas from the discharge port 14e.

The screw compressor 1 is provided with a compression mechanism 11, the shaft 12, a motor 13, the casing 14, a first bearing 15A, a second bearing 15B, and a third bearing 15C. The screw compressor 1 is also provided with the inverter unit 19.

The screw compressor 1 is characterized by having a configuration for solving the following problems. In the operation range of the screw compressor 1 shown by a solid line in FIG. 2, the density of the refrigerant R to be taken in decreases in the operation range having a lower SST and a higher SDT than the operation range of the conventional screw compressor shown by a broken line. When the density of the refrigerant R decreases, the flow rate of the refrigerant R decreases with a decrease in volumetric efficiency. Since the refrigerant R decreases, the cooling capacity of the motor 13 by the refrigerant R decreases. Therefore, the temperature of the motor 13 rises, and there is a possibility of failure or shortening of the service life.

Hereinafter, the structure of each part of the screw compressor 1 for solving the above-mentioned problem will be described in detail.

The casing 14 has a suction chamber 141, a motor chamber 142, a rotor chamber 143, and a discharge chamber 144.

The casing 14 is configured to be decomposable into three parts: a first portion 14A forming the suction chamber 141, a second portion 14B forming the motor chamber 142 and the rotor chamber 143, and a third portion 14C forming the discharge chamber 144. That is, the screw compressor 1 has a semi-closed configuration.

The first portion 14A of the casing 14 forming the suction chamber 141 is provided with the suction port 14a through which the refrigerant R as a low-pressure gas flowing out from the evaporator 7 is taken in. For example, a bottomed cylindrical filter 14f is attached to the suction port 14a. The suction chamber 141 takes in the refrigerant R as a low-pressure gas through the suction port 14a and the filter 14f when the refrigerant R is compressed by the compression mechanism 11. The first portion 14A of the casing 14 has a plurality of ribs 14r1 radially extending in the radial direction of the shaft 12 with the shaft 12 as a center. The radial ribs 14r1 support the first bearing 15A at its center.

The motor chamber 142 is provided adjacent to the suction chamber 141. The motor chamber 142 accommodates the motor 13. The motor 13 includes a rotor 131 fixed to the shaft 12 and a stator 132 disposed around the rotor 131. A permanent magnet is embedded in the rotor 131. A coil is wound around the stator 132. A coil end 132c is formed by a coil projecting from the stator 132 at an end of the stator 132 on the rotor chamber 143 side in the axial direction (X-axis direction) of the shaft 12. A coil end 132e is formed by a coil projecting from the stator 132 at an end of the stator 132 on the suction chamber 141 side in the axial direction (X-axis direction) of the shaft 12.

The motor chamber 142 has, for example, a cylindrical inner wall surface having a predetermined interval from an outer peripheral surface of the stator 132, and a plurality of projections projecting radially inward from the inner wall surface and supporting the stator 132. The plurality of projections of the motor chamber 142 supporting the stator 132 are provided at equal intervals in the radial direction of the inner peripheral surface of the motor chamber 142 and extend along the shaft 12.

The inverter unit 19 is provided on the second portion 14B of the casing 14 forming the motor chamber 142. The inverter unit 19 has, for example, an inverter 191 for supplying power to the motor 13, a cooling portion 192 for cooling the inverter 191, and a cover 193 for covering them. The inverter unit 19 of the screw compressor 1 is provided seamlessly with the casing 14. In FIG. 3, the inverter 191 and the cover 193 are not shown, and their schematic shapes are shown by two-dot chain lines.

The inverter 191 is connected to the motor 13 via, for example, a terminal unit 191a. The inverter 191 supplies power to the motor 13. The cooling portion 192 is, for example, a plate-like member made of metal having excellent thermal conductivity. The cooling portion 192 has a flow path for passing the refrigerant R in a liquid refrigerant state supplied from the injection mechanism 8 shown in FIG. 1 to the screw compressor 1. The cover 193 is, for example, a member made of resin for covering the inverter 191 and the cooling portion 192. The cover 193 is attached to the second portion 14B of the casing 14.

The rotor chamber 143 is provided adjacent to the motor chamber 142. The rotor chamber 143 accommodates the compression mechanism 11. The compression mechanism 11 includes a screw rotor 111. The compression mechanism 11 compresses the refrigerant R. More specifically, the compression mechanism 11 includes the screw rotor 111 fixed to the shaft 12, and a gate rotor 112 which engages with a helical groove provided in the screw rotor 111 and rotates about an axis perpendicular to the shaft 12.

As the screw rotor 111 rotates, the compression mechanism 11 takes in and compresses the refrigerant R within a compression chamber defined by the helical grooves of the screw rotor 111, the gate rotor 112, and a cylindrical inner wall surface provided in the second portion 14B of the casing 14. With compression of the refrigerant R being completed, the compression chamber is connected to the discharge chamber 144 via passages provided in the second portion 14B and the third portion 14C of the casing 14.

The second portion 14B of the casing 14 has a plurality of ribs 14r2 radially provided between the motor chamber 142 and the rotor chamber 143, similar to the plurality of ribs 14r1 provided in the first portion 14A of the casing 14. The plurality of radial ribs 14r2 support the second bearing 15B at its center. The second portion 14B of the casing 14 supports the third bearing 15C via a support member 14s. The support member 14s is supported by an inner wall of the second portion 14B of the casing 14 forming a compression chamber together with the compression mechanism 11, and is disposed adjacent to a partition wall of the third portion 14C of the casing 14.

The refrigerant R flowing into the motor chamber 142 from the suction chamber 141 passes between the inner peripheral surface of the motor chamber 142 and the stator 132 and between the rotor 131 and the stator 132. The refrigerant R passing between the inner peripheral surface of the motor chamber 142 and the stator 132 and between the rotor 131 and the stator 132 flows into the rotor chamber 143 while cooling the motor 13. The refrigerant R in a high-pressure gaseous state compressed in the compression chamber of the compression mechanism 11 is discharged to the discharge chamber 144 through passages provided in the second portion 14B and the third portion 14C of the casing 14.

The discharge chamber 144 discharges the refrigerant R compressed by the compression mechanism 11 to the outside.

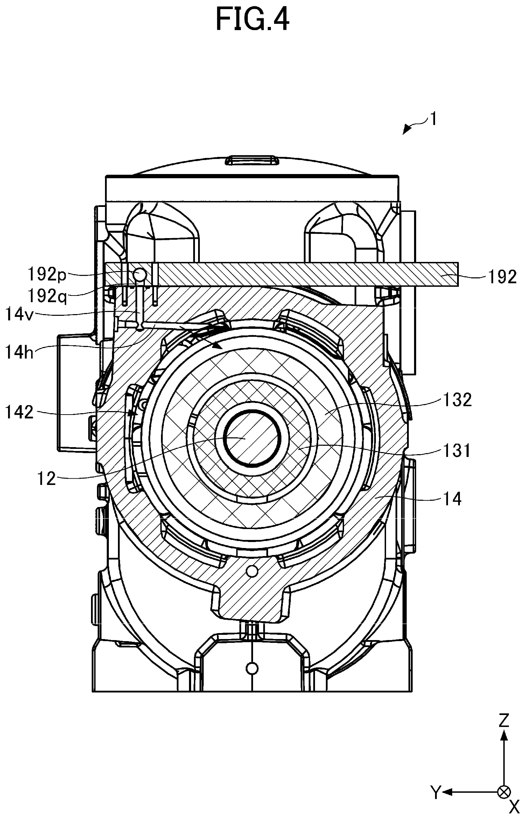

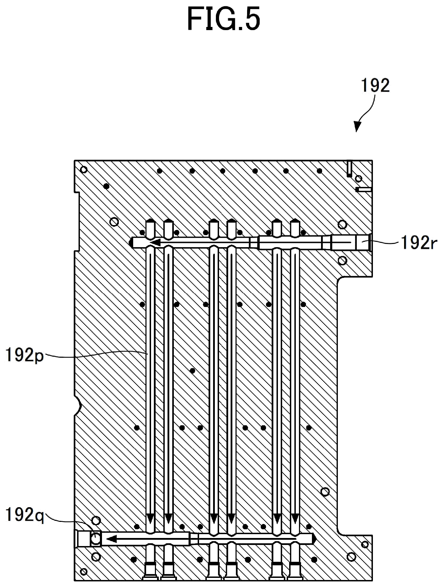

Next, a flow path through which the refrigerant R which has cooled the inverter 191 in the casing 14 passes will be described. FIG. 4 is a cross-sectional view of the screw compressor 1, an example of the screw compressor according to the present embodiment. Specifically, FIG. 4 is a cross-sectional view taken along a line A-A of FIG. 3. FIG. 5 is a cross-sectional view illustrating the cooling portion 192 in the screw compressor 1, an example of the screw compressor according to the present embodiment.

The cooling portion 192 has a flow path 192p inside which communicates from a suction port 192r for taking in the refrigerant R in a liquid state to an outlet 192q for discharging the refrigerant R to the casing 14. The refrigerant R in a liquid state is supplied from the injection mechanism 8 to the suction port 192r. As shown by an arrowed line in FIG. 5, the refrigerant R in a liquid state supplied to the suction port 192r is discharged from the outlet 192q to the casing 14 through the flow path 192p in the cooling portion 192. The flow path 192p is provided so as to branch inside the cooling portion 192 in accordance with the arrangement of the inverter 191 for cooling.

The casing 14 has a flow path 14v connected to the outlet 192q and extending in the Z-axis direction connected to the flow path 192p through which the refrigerant R in a liquid state in the cooling portion 192 flows, and a flow path 14h connected to the flow path 14v and formed along a plane parallel to the YZ plane. The flow path 14h is disposed so as to be inclined toward the -Z direction relative to the Y-axis. The flow path 14h may be provided along the Y-axis.

The refrigerant R in the liquid state which has passed through the cooling portion 192 and cooled the inverter 191 passes through the flow path 14v and the flow path 14h in the casing 14 and is discharged to the motor chamber 142. The refrigerant R in the liquid state discharged to the motor chamber 142 is supplied to the coil end 132c of the coil on the rotor chamber 143 side or a stator core 132d . In the example of the screw compressor 1, the refrigerant R in the liquid state is supplied to the coil end 132c of the coil on a side of the rotor chamber 143 or the stator core 132d, but may be supplied to the coil end 132e of the coil on a side of the suction chamber 141 or the stator core 132d.

In the screw compressor 1, the refrigerant R in the liquid state is supplied from one position to the coil end 132c or the stator core 132d. The refrigerant R in the liquid state supplied to the coil end 132c or the stator core 132d cools the coil end 132c or the stator core 132d. By cooling the coil end 132c or the stator core 132d in the inverter unit 19, the screw compressor 1 can efficiently cool the motor.

According to the screw compressor according to the present embodiment, the motor can be cooled efficiently by using the liquid refrigerant that has cooled the inverter.

### <FIRST MODIFICATION>

A first modification of the screw compressor according to the present embodiment will be described. In the first modification of the screw compressor according to the present embodiment, the liquid refrigerant is supplied from a plurality of positions in the circumferential direction.

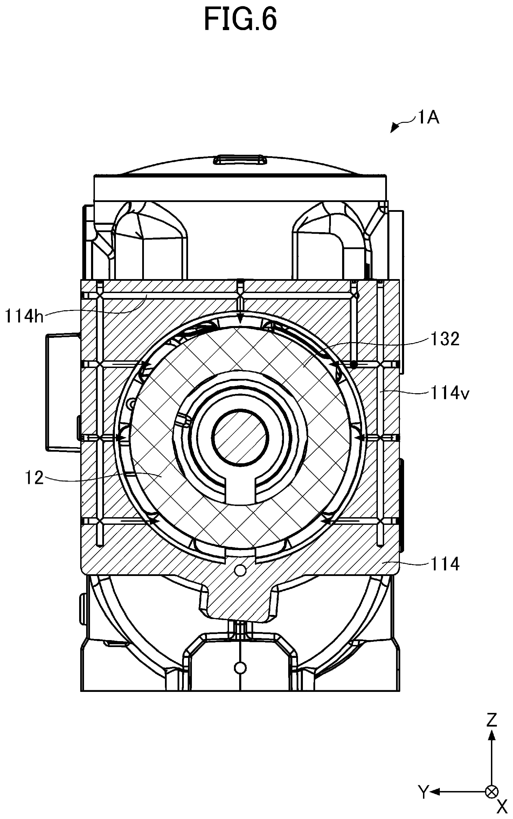

FIG. 6 is a cross-sectional view illustrating a screw compressor 1A, an example of the first modification of the screw compressor according to the present embodiment.

The screw compressor 1A includes a casing 114 instead of the casing 14 in the screw compressor 1. The casing 114 is provided with a plurality of flow paths 114v extending along the Z-axis direction and a plurality of flow paths 114h extending along the Y-axis direction. The plurality of flow paths 114v and the plurality of flow paths 114h intersect so that the refrigerant R in a liquid state flows into the plurality of flow paths 114v and the plurality of flow paths 114h, respectively. The refrigerant R in a liquid state is supplied from a refrigerant supply port (not shown) provided in the casing 114. The refrigerant R supplied to the refrigerant supply port provided in the casing 114 is the refrigerant R that has cooled the inverter unit 19.

The refrigerant R in a liquid state supplied from the refrigerant supply port provided in the casing 114 flows while filling the plurality of flow paths 114v and the plurality of flow paths 114h, respectively. The refrigerant R in a liquid state that has flowed through the plurality of flow paths 114v and the plurality of flow paths 114h is supplied to the coil end 132c or the stator core 132d of the stator 132 provided in the motor 13.

The casing 114 is supplied with the refrigerant R in a liquid state from a plurality of positions in the circumferential direction. By supplying the refrigerant R in a liquid state from a plurality of positions, the motor 13 can be cooled more efficiently.

### <SECOND MODIFICATION>

A second modification of the screw compressor according to the present embodiment will be described. In the second modification of the screw compressor according to the present embodiment, the casing has a recess on which a terminal unit is attached, and the recess extending outward on the motor chamber, and the liquid refrigerant is supplied to a coil end in proximity to the recess or a stator core.

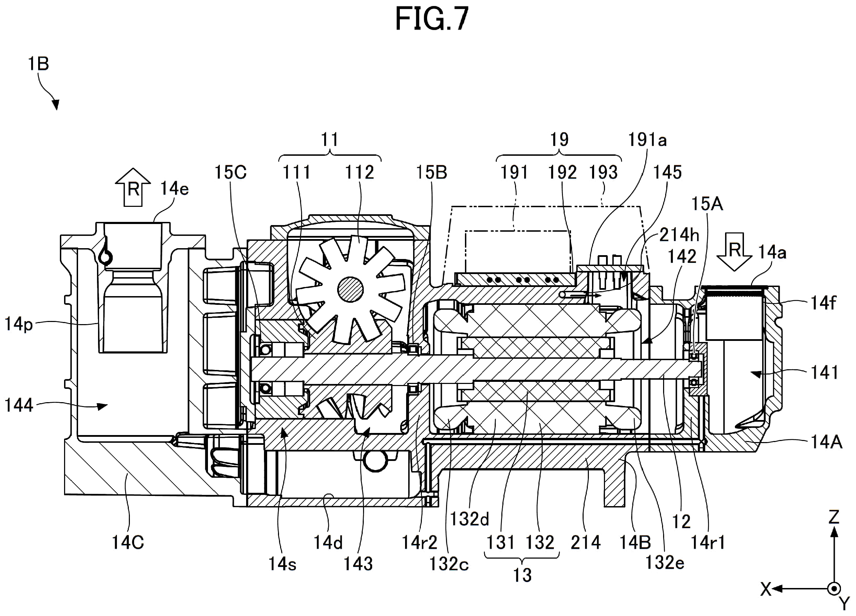

FIG. 7 is a cross-sectional view of a screw compressor 1B, an example of the second modification of the screw compressor according to the present embodiment.

The screw compressor 1B includes a casing 214 instead of the casing 14. The casing 214 has a recess 145 at which the terminal unit 191a is attached and extending outward with respect to the motor chamber 142. Wiring from the outside is connected to the terminal unit 191a. The recess 145 is provided so that a terminal in the terminal unit 191a does not interfere with a component provided inside the casing 214, for example, the motor 13.

The casing 214 has a flow path 214h extending in the X-axis direction and having one end connected to the recess 145. The flow path 214h is supplied with refrigerant R that has cooled the inverter unit 19 from a refrigerant supply port provided in the casing 214. The supplied refrigerant R is supplied to the recess 145 through the flow path 214h. The refrigerant R supplied to the recess 145 cools the gaseous refrigerant R remaining in the recess 145. The refrigerant R supplied to the recess 145 is supplied to the coil end 132e on the suction chamber 141 side or the stator core 132d. The refrigerant R supplied to the coil end 132e on the suction chamber 141 side or the stator core 132d cools the coil end 132e or the stator core 132d.

The screw compressor 1B can reduce a temperature rise due to stagnation of the gaseous refrigerant R in the recess 145 by supplying the liquid refrigerant R from the recess 145 to which the terminal unit 191a of the casing 214 is attached.

### <THIRD MODIFICATION>

A third modification of the screw compressor according to the present embodiment will be described. In the third modification of the screw compressor according to the present embodiment, a second liquid refrigerant different from the liquid refrigerant used to cool the inverter is supplied to the coil end or the stator core.

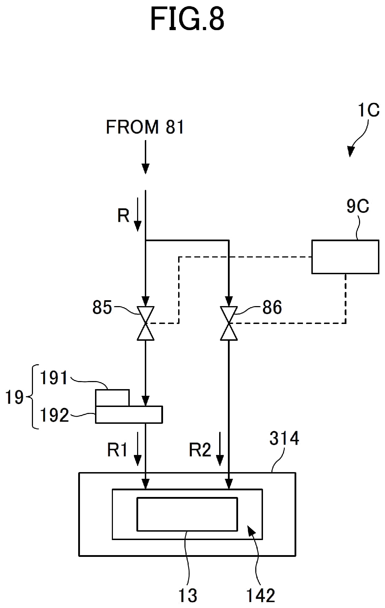

FIG. 8 is a drawing illustrating a flow of a liquid refrigerant in a screw compressor 1C, an example of the third modification of the screw compressor according to the present embodiment. The screw compressor 1C includes a casing 314 instead of the casing 14 in the screw compressor 1. The screw compressor 1C also includes a controller 9C instead of the controller 9 in the screw compressor 1. The controller 9C has all the functions of the controller 9.

As shown in FIG. 8, the refrigerant R supplied from the injection pipe 81 is divided into a refrigerant R1 for cooling the inverter 191 through the cooling portion 192 in the inverter unit 19 and a refrigerant R2 directly supplied from the injection pipe 81 to the casing 14.

The refrigerant R1 is supplied to the motor chamber 142 after cooling the inverter 191 through the cooling portion 192. Specifically, the refrigerant R1 is supplied to the coil end 132c, the coil end 132e, or the stator core 132d of the motor 13. The refrigerant R2 is supplied to the motor chamber 142 directly from the injection pipe 81. Specifically, the refrigerant R2 is supplied to the coil end 132c, the coil end 132e, or the stator core 132d of the motor 13.

The screw compressor 1C is provided with an electromagnetic valve 85 between the injection pipe 81 and the cooling portion 192. The screw compressor 1C is provided with an electromagnetic valve 86 between the injection pipe 81 and the casing 314.

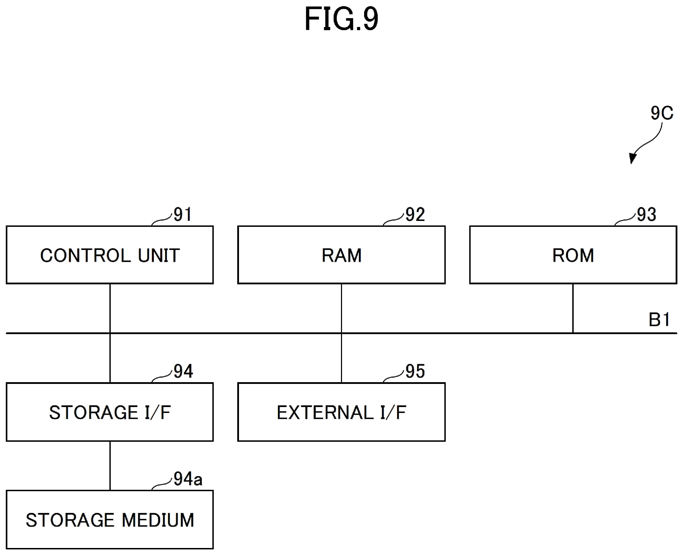

The controller 9C will be described. The controller 9C has a function of controlling the electromagnetic valve 85 and the electromagnetic valve 86 in addition to the function of the controller 9. FIG. 9 is a hardware configuration diagram illustrating a hardware configuration of the controller 9C for controlling the liquid refrigerant supplied to the third modification of the screw compressor 1C, an example of a screw compressor according to the present embodiment.

The controller 9C includes a control unit 91, a RAM (Random Access Memory) 92, and a ROM (Read Only Memory) 93. The controller 9C also includes a storage I/F (Interface) 94 and an external I/F 95. The control unit 91, the RAM 92, the ROM 93, the storage I/F 94, and the external I/F 95 are connected to a bus B1.

To the storage I/F 94, for example, a storage medium 94a is connected. To the external I/F 95, for example, the electromagnetic valve 85 and the electromagnetic valve 86 are connected. To the external I/F 95, for example, a temperature sensor for measuring the temperature of the inverter 191 and the motor 13 is connected.

The control unit 91 is a processor such as a CPU (Central Processing Unit) or an MPU (Micro Processing Unit). The control unit 91 may be an ASIC (application specific integrated circuit) or an FPGA (field-programmable gate array). When the control unit 91 executes a program, each step of processing described in the present description is performed. The control unit 91 is an arithmetic unit that reads a program (app, application) from a storage device such as the ROM 93 or the storage medium 94a into the RAM 92 and executes processing. The control unit 91, the RAM 92, and the ROM 93 are included in a computer.

The RAM 92 is, for example, a volatile semiconductor memory that temporarily holds a program (app, application) or the like.

The ROM 93 is, for example, a nonvolatile semiconductor memory that can hold a program (app, application) or the like even when the power is turned off. The ROM 93 stores a program such as a BIOS (Basic Input/Output System) to be executed at startup, and various settings such as OS (Operating System) settings and network settings.

The storage I/F 94 is an interface with an external storage device such as the storage medium 94a.

The storage medium 94a is, for example, an SD (Secure Digital) memory card, a USB (Universal Serial Bus) memory, an HDD (Hard Disk Drive), or an SSD (Solid State Drive).

The external I/F 95 is an interface for connecting each of the electromagnetic valves 85 and 86 to the control unit 91. The control unit 91 controls each of the electromagnetic valves 85 and 86 via the external I/F 95.

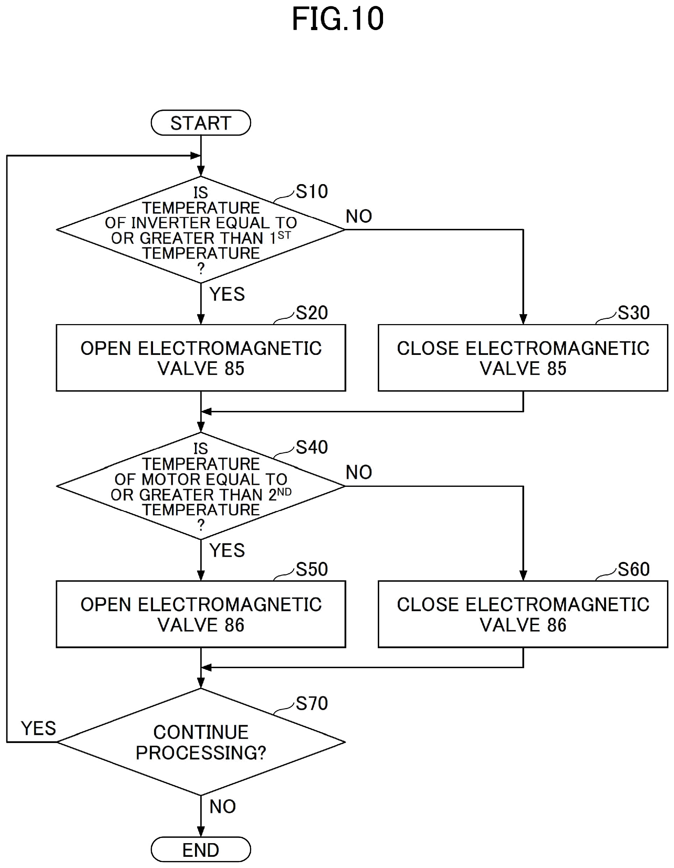

Processing of a controller for controlling a liquid refrigerant supplied to a third modification of the screw compressor according to the present embodiment will be described. FIG. 10 is a drawing illustrating processing of the controller 9C for controlling the liquid refrigerant supplied to the third modification of the screw compressor 1C according to the present embodiment.

### (STEP S10)

First, the control unit 91 determines whether the temperature of the inverter 191 is equal to or greater than the first temperature. The first temperature is, for example, 40°C. If the temperature of the inverter 191 is equal to or greater than the first temperature (YES in a step S10), the control unit 91 proceeds the processing to a step S20. If the temperature of the inverter 191 is less than the first temperature (NO in the step S10), the control unit 91 proceeds the processing to a step S30.

### (STEP S20)

If the temperature of the inverter 191 is equal to or greater than the first temperature (YES in the step S10), the control unit 91 controls the electromagnetic valve 85 to open. After controlling the electromagnetic valve 85 to open, the control unit 91 proceeds the processing to a step S40. By opening the electromagnetic valve 85, the refrigerant R1 is supplied to the cooling portion 192 in the inverter unit 19. The refrigerant R1 supplied to the cooling portion 192 cools the inverter 191 and is supplied to the motor chamber 142. The refrigerant R1 supplied to the motor chamber 142 is supplied to the coil end 132c, the coil end 132e or the stator core 132d in the motor 13. By supplying the refrigerant R1 to the coil end 132c, the coil end 132e or the stator core 132d in the motor 13, the motor 13 is cooled.

### (STEP S30)

If the temperature of the inverter 191 is less than the first temperature (NO in the step S10), the control unit 91 controls the electromagnetic valve 85 to close. After controlling the electromagnetic valve 85 to close, the control unit 91 proceeds the processing to the step S40. If the temperature of the inverter 191 is less than the first temperature, it is determined that the inverter 191 does not need to be cooled. By closing the electromagnetic valve 85, the supply of the refrigerant R1 to the cooling portion 192 in the inverter unit 19 is stopped.

### (STEP S40)

Next, the control unit 91 determines whether the temperature of the motor 13 is equal to or higher than the second temperature. The second temperature is, for example, 100°C. If the temperature of the motor 13 is equal to or greater than the second temperature (YES in the step S40), the control unit 91 proceeds the processing to a step S50. If the temperature of the motor 13 is less than the second temperature (NO in the step S40), the control unit 91 proceeds the processing to a step S60.

### (STEP S50)

If the temperature of the motor 13 is equal to or higher than the second temperature (YES in the step S40), the control unit 91 controls to open the electromagnetic valve 86. After controlling the electromagnetic valve 86 to open, the control unit 91 proceeds the processing to a step S70. By opening the electromagnetic valve 86, the refrigerant R2 is supplied to the motor chamber 142. The refrigerant R2 supplied to the motor chamber 142 is supplied to the coil end 132c, the coil end 132e, or the stator core 132d of the motor 13. By supplying the refrigerant R2 to the coil end 132c, the coil end 132e, or the stator core 132d of the motor 13, the motor 13 is cooled.

### (STEP S60)

If the temperature of the motor 13 is less than the second temperature (NO in the step S40), the control unit 91 controls the electromagnetic valve 86 to close. After controlling the electromagnetic valve 86 to close, the control unit 91 proceeds the processing to the step S70. When the temperature of the motor 13 is less than the second temperature, it is determined that it is not necessary to cool the motor 13. Alternatively, it is determined that the motor 13 is sufficiently cooled by supplying the refrigerant R1 to the motor 13 in the motor chamber 142. By closing the electromagnetic valve 86, the supply of the refrigerant R2 to the motor chamber 142 is stopped.

### (STEP S70)

The control unit 91 determines whether to continue the process. If the processing is continued (YES in the step S70), the control unit 91 advances the process to the step S10. If the processing is not continued (YES in the step S70), the control unit 91 ends the processing.

Further, the present invention is not limited to these embodiments, and various variations and modifications may be made without departing from the scope of the present invention.

The present application is based on and claims priority to Japanese patent application No. 2024-161483 filed on September 18, 2024, with the Japan Patent Office, the entire contents of which are hereby incorporated by reference.

### DESCRIPTION OF REFERENCE NUMERALS

- 1, 1A, 1B, 1C: screw compressor
- 2: refrigerant circuit
- 3: radiator
- 4: first expansion valve
- 5: gas-liquid separator
- 6: second expansion valve
- 7: evaporator
- 8: injection mechanism
- 9, 9C: controller
- 10: refrigeration apparatus
- 11: compression mechanism
- 12: shaft
- 13: motor
- 14, 114, 214, 314: casing
- 14a: suction port
- 14A: first portion
- 14B: second portion
- 14C: third portion
- 14e: discharge port
- 14f: filter
- 14h, 14v, 114h, 114v, 214h: flow path
- 14r1: rib
- 14r2: rib
- 14s: support member
- 15A: first bearing
- 15B: second bearing
- 15C: third bearing
- 111: screw rotor
- 112: gate rotor
- 131: rotor
- 132: stator
- 132c, 132e: coil end
- 132d: stator core
- 141: suction chamber
- 142: motor chamber
- 143: rotor chamber
- 144: discharge chamber
- 145: recess
- 191: inverter
- 191a: terminal unit
- 192: cooling portion
- 192p: flow path
- 192q: discharge port
- 192r: suction port
- 214h: flow path
- R, R1, R2: refrigerant

## Claims

1. A screw compressor (1, 1A, 1B, 1C) comprising:
a compression mechanism (11) including a screw rotor (111) and configured to compress a refrigerant (R) ;
a motor (13) configured to rotate the screw rotor (111) and including a coil and a stator core (132d);
an inverter (191) configured to supply electric power to the motor (13) and to be cooled by a liquid refrigerant (R); and
a casing (14, 114, 214, 314) including a suction chamber (141) configured to receive the refrigerant (R) from outside, a rotor chamber (143) configured to accommodate the compression mechanism (11), and a motor chamber (142) configured to accommodate the motor (13) and located between the suction chamber (141) and the rotor chamber (143),
wherein the liquid refrigerant (R) that has cooled the inverter (191) is supplied to one or more coil ends (132c, 132e) of the coil or the stator core (132d).

2. The screw compressor (1A) according to claim 1, wherein the liquid refrigerant (R) supplied to the one or more coil ends (132c, 132e) or the stator core (132d) is supplied from one position or a plurality of positions in a circumferential direction.

3. The screw compressor (1, 1A) according to claim 1 or 2, wherein the liquid refrigerant (R) is supplied to a coil end (132e), the coil end of the one or more coil ends of the coil being on a side of the suction chamber (141).

4. The screw compressor (1B) according to claim 1 or 2, wherein the liquid refrigerant (R) is supplied to a coil end (132c), the coil end of the one or more coil ends of the coil being on a side of the rotor chamber (143).

5. The screw compressor (1B) according to claim 1 or 2, comprising a terminal unit (191a), wiring from the outside being connected to the terminal unit (191a), wherein:
the casing (214) has a recess (145) at which the terminal unit (191a) is attached, the recess (145) extending outward relative to the motor chamber (142); and
the liquid refrigerant (R) is supplied to a coil end (132e) in proximity to the recess (145), the coil end being of the one or more coil ends, or the stator core (132d).

6. The screw compressor (1, 1A, 1B, 1C) according to any one of claims 1 to 5, wherein the inverter (191) is provided seamlessly with the casing (14, 114, 214, 314).

7. The screw compressor (1C) according to any one of claims 1 to 6, wherein a second liquid refrigerant (R2), other than the liquid refrigerant (R1) that has cooled the inverter (191), is further supplied to the one or more coil ends (132c, 132e) or the stator core (132d).

8. The screw compressor (1C) according to claim 7, wherein:
the liquid refrigerant (R1) is supplied to the one or more coil ends (132c, 132e) or the stator core (132d) when a temperature of the inverter (191) is equal to or greater than a first temperature; and
the second liquid refrigerant (R2) is supplied to the one or more coil ends (132c, 132e) or the stator core (132d) when a temperature of the motor (13) is equal to or greater than a second temperature.

9. A refrigeration apparatus (10) comprising the screw compressor (1, 1A, 1B, 1C) of any one of claims 1 to 8.
